# EUROPÄISCHE PATENTSCHRIFT

(11) **EP 3 478 727 B1**
(45) Veröffentlichungstag und Bekanntmachung des Hinweises auf die Patenterteilung: **26.02.2020**
(21) Anmeldenummer: 17731097.6
(22) Anmeldetag: 09.06.2017
(51) Int. Cl.: C08F 8/30, C08F 212/00, C08J 9/28, C08F 212/08, C08F 212/36, C08F 212/12

(54) **VERFAHREN ZUR HERSTELLUNG VON AMIDOMETHYLIERTEN VINYLAROMATISCHEN PERLPOLYMERISATEN**
PROCESS FOR THE PREPARATION OF AMIDOMETHYLATED VINYL AROMATIC BEAD POLYMERS
PROCÉDÉ DE PRÉPARATION DE PERLES DE POLYMÈRES VINYLAROMATIQUES AMIDOMÉTHYLÉS

(30) Priorität: 29.06.2016 EP 16177010; 03.08.2016 EP 16182499
(43) Veröffentlichungstag der Anmeldung: 08.05.2019
(73) Patentinhaber: LANXESS Deutschland GmbH, 50569 Köln (DE)
(72) Erfinder: KOOP, Bernd, 50668 Köln (DE)
(86) Internationale Anmeldenummer: PCT/EP2017/064079
(87) Internationale Veröffentlichungsnummer: WO 2018/001698

(56) Entgegenhaltungen:
- EP-A1- 2 835 384
- EP-A1- 3 012 272
- WO-A1-98/42774
- US-A- 4 232 125
- L. A. ERREDE: "Polymer swelling 2: A restudy of poly(styrene-co-divinylbenzene) swelling in terms of the cross-link density 1", JOURNAL OF APPLIED POLYMER SCIENCE, Bd. 31, Nr. 6, 5. Mai 1986 (1986-05-05), Seiten 1749-1761, XP055330380, US ISSN: 0021-8995, DOI: 10.1002/app.1986.070310620
- KLRA VEREBLYI ET AL: "Cationic polymerization of styrene by the TiCl/N,N,N,N-tetramethylethylenediamine(TM EDA) catalyst system in benzotrifluoride, an environmentally benign solvent, at room temperature", POLYMER, ELSEVIER SCIENCE PUBLISHERS B.V, GB, Bd. 53, Nr. 16, 27. Mai 2012 (2012-05-27), Seiten 3426-3431, XP028404099, ISSN: 0032-3861, DOI: 10.1016/J.POLYMER.2012.05.055 [gefunden am 2012-06-02]
- Gene M. Le Fave: "Some Reactions of the Trifluoromethyl Group in the Benzotrifluoride Series. I. Hydrolysis", Journal of the American Chemical Society, vol. 71, no. 12, 1 December 1949 (1949-12-01), pages 4148-4149, XP055627812,

## Beschreibung

Die Erfindung betrifft ein Verfahren zur Herstellung von amidomethylierten, vinylaromatischen Perlpolymerisaten.

Amidomethylierte, vinylaromatische Perlpolymerisate stellen wichtige Zwischenprodukte bei der Synthese von Ionenaustauschern und Chelatharzen dar. Verfahren zur Herstellung monodisperser, phthalimidomethylierter, vinylaromatischer Perlpolymerisate sind aus der US 6649663 B1 und der US 7053129 B1 bekannt. In beiden Verfahren werden zunächst in einem ersten Schritt N-Methylolphthalimid erzeugt, welches in einem weiteren Schritt säurekatalytisch zu Bis(phthalimidomethyl)ether umgesetzt wird. Aus dem Bis(phthalimidomethyl)ether wird dann in einem dritten Schritt das SO₃-Addukt des Bis(phthalimidomethyl)ether hergestellt, welches mit den monodispersen Perlpolymerisaten zum monodispersen, phthalimidomethylierten, vinylaromatischen Perlpolymerisat umgesetzt wird. Der Nachteil an beiden Verfahren ist, dass sie eine Vielzahl von Reaktionsstufen umfassen, apparativ aufwendig sind und eine zeitintensive Verfahrensbetreuung benötigen, so dass sie aus ökologischer und ökonomischer Sicht nicht effizient sind.

Aus der EP-A-2835384 ist ein Verfahren zur Herstellung von amidomethylierten, vinylaromatischen Perlpolymerisaten bekannt, bei dem Phthalimid und Paraformaldehyd in Gegenwart von 1,2-Dichlorethan als Quellungs- und Lösungsmittel mit dem vinylaromatischen Perlpolymerisat umgesetzt werden. Aus L.A. Errede: "Polymer Swelling 2: A restudy of poly(styrene-co-divinylbenzen) swelling in terms of the cross-link density 1", Journal of Applied Polymer Science, Bd. 31, Nr. 6,5, Mai 1986 (1986-05-05), Seiten 1749-1763 und Klra Vereblyi et al.: Cationic polymerization of styrene by TiCl4/N,N,N,N-tetramethylethylenediamine (TMEDA) catalyst system in benzotrifluoride, an enviromentally benign solvent, at room temperature", Polymer, Elsevier Science Publisher B.V., GB, Bd. 53, Nr.16, 27. Mai 2012, Seiten 3426-3431 ist bekannt, dass Benzotrifluorid als Lösung- und Quellungsmittel für Styrolharze eingesetzt werden kann.

Es bestand daher weiterhin das Bedürfnis nach einem Verfahren, dass die Nachteile des Standes der Technik überwindet und mit dem amidomethylierte, vinylaromatische Perlpolymerisate effizient hergestellt werden können.

Es wurde nun überraschend gefunden, dass die Umsetzung vinylaromatischer Perlpolymerisate mit kondensierten Formaldehyden und Protonensäuren und in Gegenwart von ausgewählten aromatischen Lösungsmitteln unter geeigneten Reaktionsbedingungen zu amidomethylierten, vinylaromatischen Perlpolymerisaten unter hohen Ausbeuten abläuft.

Gegenstand der vorliegenden Erfindung ist daher ein Verfahren zur Herstellung amidomethylierter, vinylaromatischer Perlpolymerisate bei dem mindestens ein vinylaromatisches Perlpolymerisat mit mindestens einer Verbindung der Formel (I) oder deren Salze 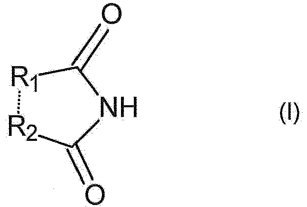 wobei R₁ = -CH-(C₁-C₆-Alkyl) oder -CH₂- und R₂ = -CH-(C₁-C₆-Alkyl) oder -CH₂- oder R₁ und R₂ sind zwei Kohlenstoffatome eines gegebenenfalls durch ein oder zwei C₁-C₆-Alkylreste substituierten aromatischen C₆-Ringes oder R₁ und R₂ stehen jeweils für -CH=,
und mindestens ein kondensiertes Formaldehyd in Gegenwart mindestens einer Protonensäure und in Gegenwart mindestens einer Verbindung der Formel (II) 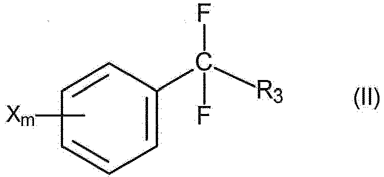 wobei R₃ = -C₁-C₄-Alkyl, F oder Cl oder ganz oder teilweise chloriertes oder fluoriertes C₁-C₄-Alkyl ist und X = Cl oder F und m = 0, 1 oder 2 ist, umgesetzt wird.

R₁ und R₂ stellen bevorzugt gemeinsam einen durch C₁-C₆-Alkyl substituierten aromatischen C₆-Ring dar. Besonders bevorzugt stellen R₁ und R₂ einen Benzolring dar, welcher gegebenenfalls durch C₁-C₄-Alkyl substituiert ist. Ganz besonders bevorzugt stellen Verbindungen der Formel (I) Phthalimid, Succinimid oder Maleinimid dar. Noch weiter bevorzugt ist die Verbindung der Formel (I) Phthalimid oder dessen Salze. Bei Verwendung von Phthalimid werden erfindungsgemäß phthalimidomethylierte Perlpolymerisate hergestellt. Als Salze der Verbindungen der Formel (I) werden im Allgemeinen Additionsprodukte anorganischer oder organischer Säuren oder Laugen mit Verbindungen der Formel (I), wie z.B. Chlorid, Sulfat, Sulfit, Phosphat, Phosphit, Acetat, Oxalat, Tartrat, Formiat oder Citrat verstanden. Falls Salze eingesetzt werden, werden bevorzugt die Chloride oder Sulfate der Verbindungen der Formel (I) eingesetzt.

C₁-C₆-Alkyl bzw. C₁-C₄-Alkyl stehen im Rahmen der Erfindung für einen geradkettigen, zyklischen, verzweigten oder unverzweigten Alkylrest mit 1 bis 6 bzw. mit 1 bis 4 Kohlenstoffatomen. Beispielhaft und vorzugsweise steht C₁-C₆-Alkyl für Methyl, Ethyl, n-Propyl, Isopropyl, n-, i-, s- oder t-Butyl, Cyclopropyl, n-Propyl, 1-Methylbutyl.

Beispielhaft und vorzugsweise steht C₁-C₄-Alkyl für Methyl, Ethyl, n-Propyl und Isopropyl.

Unter kondensiertem Formaldehyd werden Kondensate des Formaldehyds verstanden. Die Herstellung solcher Verbindungen erfolgt nach üblichen dem Fachmann bekannten Verfahren. Als kondensierte Formaldehyde werden beispielsweise Verbindungen der Formel (III) eingesetzt 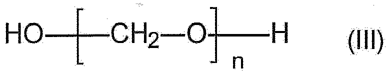 wobei n = 8 bis 100 ist. Bevorzugt werden Verbindungen der Formel (III) eingesetzt,bei denen n = 8 bis 15 ist. Besonders bevorzugt werden Verbindungen der Formel (III) eingesetzt, bei denen n = 8 bis 30 ist.

Es können aber auch zyklische Kondensate wie z.B. Trioxan eingesetzt werden. Besonders bevorzugt werden als kondensiertes Formaldehyd Paraformaldehyd oder Trioxan oder Gemische dieser Verbindungen eingesetzt. Ganz besonders bevorzugt wird als kondensiertes Formaldehyd Paraformaldehyd eingesetzt.

Die Verbindungen der Formel (II) stellen insbesondere Quellmittel für die Perlpolymerisate dar, dienen aber ebenfalls als Lösungsmittel für die weiteren Edukte der Amidoalkylierungsreaktion. Als Verbindung der Formel (II) im Sinne der Erfindung werden Benzotrifluorid, Pentafluorethanbenzol, 4-Chlorbenzotrifluorid, 3-Chlorbenzotrifluorid, 2-Chlorbenzotrifluorid, Dichlorbenzotrifluorid, Difluorethanbenzol, 3,4-Dichlorbenzotrifluorid, Heptafluorpropanbenzol oder 1,1-Difluorpentachlorpropanbenzol oder Mischungen dieser Verbindungen eingesetzt. Besonders bevorzugt werden als Verbindungen der Formel (II) Chlorbenzotrifluorid, Dichlorbenzotrifluorid und Benzotrifluorid oder Mischungen dieser Verbindungen eingesetzt. Ganz besonders bevorzugt wird als Verbindung der Formel (II) Benzotrifluorid eingesetzt.

Als Protonensäuren können beispielsweise anorganische oder organische Protonensäuren eingesetzt werden. Als anorganische Protonensäuren werden beispielsweise Salzsäure, Schwefelsäure, Oleum, Salpetersäure, salpetrige Säure, schwefelige Säure, aliphatische oder aromatische Methan-, Benzol,- oder Toluolsulfonsäuren oder Phosphorsäure eingesetzt. Als organische Protonensäuren können z.B. Oxalsäure, Essigsäure oder Ameisensäure eingesetzt werden. Bevorzugt werden anorganische Protonensäuren eingesetzt. Besonders bevorzugt werden als Protonensäuren Schwefelsäure oder Oleum eingesetzt.

Als Perlpolymerisate werden erfindungsgemäß kugelförmige, vernetzte Polymerisate verstanden. Der Begriff vinylaromatisch im Sinne der Erfindung umfasst polyvinylaromatische und monovinylaromatische Monomere. Zur Herstellung der vinylaromatischen Perlpolymerisate wird beispielsweise mindestens eine monovinylaromatische Verbindung und mindestens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen. Bevorzugt werden zur Herstellung der vinylaromatischen Perlpolymerisate mindestens eine monovinylaromatische Verbindung und mindestens eine polyvinylaromatische Verbindung eingesetzt.

Als monovinylaromatische Verbindungen im Sinne der vorliegenden Erfindung werden bevorzugt monoethylenisch ungesättigte Verbindungen, wie beispielsweise Styrol, Vinyltoluol, Ethylstyrol, α-Methylstyrol, Chlorstyrol und Chlormethylstyrol, eingesetzt.

Besonders bevorzugt wird Styrol oder Mischungen aus Styrol mit den vorgenannten Monomeren eingesetzt.

Bevorzugte polyvinylaromatische Verbindungen im Sinne der vorliegenden Erfindung sind multifunktionelle ethylenisch ungesättigte Verbindungen, wie beispielsweise Divinylbenzol, Divinyltoluol, Trivinylbenzol, Divinylnaphtalin oder Trivinylnaphtalin,.

Die polyvinylaromatischen Verbindungen werden im Allgemeinen in Mengen von 1-20 Gew.-%, vorzugsweise 2-12 Gew.-%, besonders bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Perlpolymerisates ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

In einer bevorzugten Ausführungsform sind die vinylaromatischen Perlpolymerisate Styrol/ Divinylbenzol vernetzte Copolymerisate.

In einer bevorzugten Ausführungsform der vorliegenden Erfindung kommen mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane, Polyharnstoffe.

Als natürliches Polyamid ist beispielsweise Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente, beispielsweise ein Isocyanat oder ein Säurechlorid, mit einer zweiten, in der wässrigen Phase gelösten Reaktivkomponente, beispielsweise einem Amin, zur Reaktion gebracht wird.

Die gegebenenfalls mikroverkapselten Monomertröpfchen enthalten gegebenenfalls einen Initiator oder Mischungen von Initiatoren zur Auslösung der Polymerisation. Für das erfindungsgemäße Verfahren geeignete Initiatoren sind beispielsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azo-bis(isobutyronitril) oder 2,2'-Azobis(2-methylisobutyronitril).

Die Initiatoren werden im Allgemeinen in Mengen von 0,05 bis 2,5 Gew.-%, vorzugsweise 0,1 bis 1,5 Gew.-%, bezogen auf die Monomeren-Mischung, angewendet.

Als weitere Zusätze in den gegebenenfalls mikroverkapselten Monomertröpfchen können gegebenenfalls Porogene verwendet werden, um im Perlpolymerisat eine makroporöse Struktur zu erzeugen. Hierfür sind organische Lösungsmittel geeignet, die das entstandene Polymerisat schlecht lösen bzw. quellen - (Fällmittel für Polymere). Beispielhaft seien Hexan, Octan, Isooctan, Isododecan, Methylethylketon, Butanol oder Octanol und deren Isomeren genannt Bevorzugt wird Isododecan als Porogen eingesetzt. Bevorzugt werden Porogene bei der Herstellung der erfindungsgemäßen amidomethylierten, vinylaromatischen Perlpolymerisate eingesetzt.

Die Begriffe mikroporös oder gelförmig bzw. makroporös sind in der Fachliteratur bereits eingehend beschrieben worden.

Bevorzugte Perlpolymerisate im Sinne der vorliegenden Erfindung weisen eine makroporöse Struktur auf.

Besonders bevorzugt wird als vinylaromatisches Perlpolymerisat ein makroporöses, monodisperses, vinylaromatisches Perlpolymerisat eingesetzt.

Das gegebenenfalls mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Perlpolymerisate können in heterodisperser oder monodisperser Form hergestellt werden. Die Herstellung heterodisperser Perlpolymerisate geschieht nach allgemeinen, dem Fachmann bekannten Verfahren, z.B. mit Hilfe der Suspensionspolymerisation.

Bevorzugt werden monodisperse, vinylaromatische Perlpolymerisate im erfindungsgemäßen Verfahren hergestellt.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von +/- 10 % des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Das monodisperse Perlpolymerisat kann nach den aus der Literatur bekannten Verfahren hergestellt werden. Bei der Herstellung von monodispersen, vinylaromatischen Perlpolymerisate kann die wässrige Phase gegebenenfalls einen gelösten Polymerisationsinhibitor enthalten. Bevorzugt enthält die wässrige Phase einen gelösten Polymerisationsinhibitor. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitro-sophenylhydroxylamin-Ammoniumsalz oder N-Nitrosophenylhydroxylamin-Aluminiumsalz. Die Konzentration des Inhibitors beträgt 5 - 1000 ppm bezogen auf die wässrige Phase, vorzugsweise 10 - 500 ppm, besonders bevorzugt 10 - 250 ppm.

Die Polymerisation der gegebenenfalls mikroverkapselten Monomertröpfchen zum monodispersen, vinylaromatischen Perlpolymerisat erfolgt, wie bereits oben erwähnt, gegebenenfalls in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Sehr gut geeignet sind auch Cellulosederivate, insbesondere Celluloseester und Celluloseether, wie Carboxymethylcellulose, Methylhydroxy-ethylcellulose, Methylhydroxypropylcellulose und Hydroxyethylcellulose. Besonders gut geeignet ist Gelatine. Die Einsatzmenge der Schutzkolloide beträgt im Allgemeinen 0,05 bis 1 Gew.-% bezogen auf die wässrige Phase, vorzugsweise 0,05 bis 0,5 Gew. %.

Die Polymerisation zum monodispersen, vinylaromatischen Perlpolymerisat kann gegebenenfalls auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8, einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt 0,5 - 500 mmol/l, vorzugsweise 2,5 - 100 mmol/l.

Die Rührgeschwindigkeit bei der Polymerisation ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt im Allgemeinen zwischen 50 bis 180°C, vorzugsweise zwischen 55 und 130°C. Die Polymerisation dauert im Allgemeinen 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, beispielsweise durch Filtrieren oder Dekantieren, isoliert und gegebenenfalls gewaschen.

In einem weiteren Schritt wird das vinylaromatische Perlpolymerisat mit mindestens einer Verbindung der Formel (I), mindestens einem kondensierten Formaldehyd in Gegenwart mindestens einer Verbindung der Formel (II) und in Gegenwart mindestens einer Protonensäure zum amidomethylierten, vinylaromatischen Perlpolymerisat umgesetzt.

Das vinylaromatische Perlpolymerisat kann beispielsweise zunächst aufgequollen werden und in diesem Zustand mit einer Mischung aus den Verbindungen der Formel (I), den kondensiertem Formaldehyd und den Protonensäuren vermischt werden. Genauso könnte aber zunächst die Verbindungen der Formel (I) zu dem vernetzten Perlpolymerisate in Gegenwart der Verbindung der Formel (II) hinzugegeben werden und danach das kondensierte Formaldehyd und dann die Protonensäuren hinzugefügt werden. Bevorzugt wird zunächst das vernetzte Perlpolymerisat in Gegenwart der Verbindung der Formel (II) aufgequollen und dann die Verbindungen der Formel (I) oder das kondensierte Formaldehyd hinzugegeben und dann die Protonensäure hinzugefügt. Die Abtrennung der Verbindung der Formel (II) erfolgt vorzugsweise destillativ. Die Aufarbeitung der Reaktionsprodukte erfolgt nach dem Fachmann bekannten Verfahren. Bevorzugt wird die Reaktionsmischung erwärmt. Bevorzugt verläuft die Reaktion in einer Eintopfreaktion.

Im Allgemeinen beträgt das Stoffmengenverhältnis der Verbindungen der Formel (II) zu den Verbindungen der Formel (I) 2:1 bis 10:1. Bevorzugt beträgt das Stoffmengenverhältnis der Verbindungen der Formel (II) zu den Verbindungen der Formel (I) 3,5:1 bis 9:1.

Das Stoffmengenverhältnis der aromatischen Gruppen im vinylaromatischen Perlpolymerisat zu den Verbindungen der Formel (I) beträgt beispielsweise 0,2:1 bis 2,5:1. Bevorzugt beträgt das Stoffmengenverhältnis der aromatischen Gruppen im vinylaromatischen Perlpolymerisat zu den Verbindungen der Formel (I) 0,5:1 bis 1,8:1.

Das Stoffmengenverhältnis von Verbindungen der Formel (I) zu kondensiertem Formaldehyd beträgt beispielsweise 0,7:1 bis 1,3:1. Bevorzugt beträgt das Stoffmengenverhältnis von Verbindungen der Formel (I) zu kondensiertem Formaldehyd 0,95:1 bis 1,1:1.

Das Stoffmengenverhältnis der Verbindungen der Formel (I) zu der eingesetzten Protonensäure beträgt im Allgemeinen zwischen 10:1 bis 1:10. Bevorzugt beträgt das Stoffmengenverhältnis der Verbindungen der Formel (I) zu der eingesetzten Protonensäure 1:1 bis 1:10.

Die Reaktionstemperatur für die Umsetzung der vinylaromatischen Perlpolymerisate zu den amidomethylierten, vinylaromatischen Perlpolymerisaten liegt im Allgemeinen zwischen 10°C und 70°C. Bevorzugt liegt die Reaktionstemperatur für die Umsetzung der vinylaromatischen Perlpolymerisate zu den amidomethylierten, vinylaromatischen Perlpolymerisaten zwischen 20 °C und 40 °C.

Die Reaktion wird im Allgemeinen unter Normaldruck durchgeführt. Die Reaktion kann aber auch bei höheren oder niedrigeren Drücken durchgeführt werden.

Die amidomethylierten, vinylaromatischen Perlpolymerisate sind insbesondere bedeutsame Zwischenprodukte für die Herstellung von Ionenaustauschern und Chelatharzen. So lassen sich beispielsweise aus den, nach dem erfindungsgemäßen Verfahren hergestellten amidomethylierten, vinylaromatischen Perlpolymerisate, Ionenaustauscher, insbesondere Anionenaustauscher, und Chelatharze, herstellen.

Das amidomethylierte, vinylaromatische Perlpolymerisat kann dann in einem weiteren Schritt zu aminomethylierten, vinylaromatischen Perlpolymerisaten umgesetzt werden. Bevorzugt wird das amidomethylierte, vinylaromatische Perlpolymerisat weiter zu aminomethylierten, vinylaromatischen Perlpolymerisaten umgesetzt. Im Allgemeinen erfolgt die Umsetzung durch Behandeln des amidomethylierten, vinylaromatischen Perlpolymerisates mit wässrigen oder alkoholischen Lösungen eines Alkalihydroxids, wie Natriumhydroxid oder Kaliumhydroxid bei Temperaturen zwischen 100°C und 250°C, vorzugsweise bei Temperaturen zwischen 120 °C und 190°C. Bevorzugt erfolgt die Umsetzung mit Alkali- oder Erdalkalihydroxiden oder Gemischen dieser Verbindungen, besonders bevorzugt mit Alkalihydroxiden, wie insbesondere Natriumhydroxid. Bevorzugt verläuft die Umsetzung in Gegenwart einer wässrigen oder alkoholischen Lösung eines Alkalihydroxides. Die Konzentration der Natronlauge liegt im Bereich von 10 bis 50 Gew.-%, vorzugsweise 20 bis 40 Gew.-%. Dieses Verfahren ermöglicht die Herstellung aminomethylierter, vinylaromatischer Perlpolymerisate mit einer Substitution der aromatischen Kerne bis 1,5.

Das dabei entstehende aminomethylierte, vinylaromatische Perlpolymerisat kann mit vollentsalztem Wasser alkalifrei gewaschen werden.

Das aminomethylierte, vinylaromatische Perlpolymerisat kann mit weiteren Alkylierungsmittel zu Anionenaustauschern oder Chelatharzen umgesetzt werden oder auch als Ionenaustauscher verwendet werden.

Weiterhin ist möglich, die erfindungsgemäßen aminomethylierte, vinylaromatische Perlpolymerisate mit Halomethylstickstoffheterocyclen, wie z.B. 2-Chlormethylpyridin, 3-Chlormethylpyridin oder 4-Chlormethylpyridin umzusetzen und dadurch Chelatharze herzustellen.

Ein allgemeines Verfahren zur Herstellung von Anionenaustauschern und Chelatharze ist eines, bei dem
a) Monomertröpfchen aus mindestens einer monovinylaromatischen Verbindung und mindestens einer polyvinylaromatischen Verbindung sowie gegebenenfalls einem Porogen und zumindest einem Initiator, zu einem vinylaromatischen Perlpolymerisat umgesetzt werden,
b) dieses vinylaromatische Perlpolymerisat in Gegenwart von Verbindungen der Formel (II) und in Gegenwart von Verbindungen der Formel (I) und mindestens einem kondensiertem Formaldehyd und in Gegenwart mindestens einer Protonensäure, zu amidomethyliertem, vinylaromatischen Perlpolymerisat umgesetzt wird und
c) das amidomethylierte, vinylaromatischen Perlpolymerisat zu aminomethyliertem, vinylaromatischem Perlpolymerisat umgesetzt wird und
d) schließlich das aminomethylierte, vinylaromatische Perlpolymerisat mit Alkylierungsmittel zu Anionenaustauschern und Chelatharzen umgesetzt wird.

Alkylierungsmittel sind üblicherweise Alkylhalogenide, Halogenalkohole, Alkylsulfate, Dialkylsulfate, Alkyloxide, Leuckart-Wallach-Reagenzien oder Kombinationen dieser Alkylierungsmittel untereinander bzw. nacheinander.

Häufig werden Chlormethan, Ethylenoxid, Propylenoxid sowie die Leuckert-Wallach-Reagenzien oder deren Kombination eingesetzt. Beispielhaft werden Leuckart-Wallach-Reagenzien in Organikum, VEB Deutscher Verlag der Wissenschaften, Berlin 1968, 8. Auflage, Seite 479 beschrieben.

Als Suspensionsmedium werden Wasser oder Mineralsäuren eingesetzt. Gegebenenfalls können aber auch in Abhängigkeit des gewünschten Produktes Basen zugesetzt werden. Bevorzugt wird Wasser eingesetzt. Als Basen kommen gegebenenfalls Natronlauge, Kalilauge oder basische, jedoch nicht nucleophile Amine in Frage.

Der Verfahrensschritt d) wird durchgeführt bei Temperaturen von 20 bis 150°C, bevorzugt von 40 bis 110°C. Verfahrensschritt d) wird bei Drücken von Normaldruck bis 6 bar, bevorzugt bei Normaldruck bis 4 bar durchgeführt.

Mit der vorliegenden Erfindung wird ein Herstellungsverfahren für amidomethylierte, vinylaromatische Perlpolymerisate zur Verfügung gestellt, mit der diese insbesondere phthalimidomethylierte Perlpolymerisate, und aminomethylierte, Perlpolymerisate, effizient, unter Berücksichtigung ökologischer Gesichtspunkte und in hoher Ausbeute hergestellt werden können.

### Beispiel 1

### 1.1 Herstellung des monodispersen, makroporösen Perlpolymerisates auf der Basis von Styrol, Divinylbenzol und Ethylstyrol

In einem 10 l Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrößenverteilung aus 3,1 Gew.-% Divinylbenzol und 0,6 Gew.-% Ethylstyrol (eingesetzt als handelsübliches Isomerengemisch aus Divinylbenzol und Ethylstyrol mit 80 % Divinylbenzol), 0,4 Gew.-% Dibenzoylperoxid, 58,6 Gew.-% Styrol und 37,5 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet.

Man erhält 1893 g eines Perlpolymerisates mit enger Teilchengrößenverteilung.

### 1.2. Herstellung eines phthalimidomethylierten, monodispersen, makroporösen Perlpolymerisates mit dem Quellungsmittel Benzotrifluorid

In einem Rundkolben werden 713 g Benzotrifluorid vorgelegt. Dazu gibt man 103,6 g Perlpolymerisat aus Beispiel 1.1, 147,1 g Phthalimid und 31,3 g Paraformaldehyd und lässt anschließend 30 min bei Raumtemperatur rühren. Innerhalb von 30 min werden unter Kühlung 367,2 g Schwefelsäure (96%-ig) zugetropft, so dass eine Temperatur von 25°C nicht überschritten wird. Anschließend wird 24 h bei Raumtemperatur gerührt und danach die Perlen auf einem Sieb abgetrennt und mit Wasser, Aceton, Essigsäure und Wasser gewaschen.
Volumenausbeute: 570 ml
Stickstoffgehalt (nach Trocknung): 5,2%

### Beispiel 2

### Vergleichsbeispiel (nicht erfindungsgemäß)

### 2.1 Herstellung eines phthalimidomethylierten, monodispersen, makroporösen Perlpolymerisates mit dem Quellungsmittel Dichlorethan

In einem Rundkolben werden 625 g 1,2-Dichlorethan vorgelegt. Dazu gibt man 103,6 g Perlpolymerisat aus Beispiel 1.1, 147,1 g Phthalimid und 31,3 g Paraformaldehyd und lässt anschließend 30 min bei Raumtemperatur rühren. Innerhalb von 30 min werden 363,3 g Schwefelsäure (96%-ig) zugetropft und anschließend wird 24 h bei Raumtemperatur gerührt. Danach werden die Perlen auf einem Sieb abgetrennt und mit Wasser, Aceton, Essigsäure und Wasser gewaschen.
Volumenausbeute: 605 ml
Stickstoffgehalt (nach Trocknung): 5,1%

### Beispiel 3

### Vergleichsbeispiel (nicht erfindungsgemäß)

### 3.1 Herstellung eines phthalimidomethylierten, monodispersen, makroporösen Perlpolymerisates mit dem Quellungsmittel Fluorbenzol

In einem Rundkolben werden 371 g Fluorbenzol vorgelegt. Dazu gibt man 62,2 g Perlpolymerisat aus Beispiel 1.1, 88,2 g Phthalimid und 18,8 g Paraformaldehyd und lässt anschließend 30 min bei Raumtemperatur rühren. Innerhalb von 30 min werden unter Kühlung 218,3 g Schwefelsäure (96%-ig) zugetropft, so dass eine Temperatur von 25°C nicht überschritten wird. Anschließend wird 24 h bei Raumtemperatur gerührt und danach die Perlen auf einem Sieb abgetrennt und mit Wasser, Aceton, Essigsäure und Wasser gewaschen.
Volumenausbeute: 156 ml
Stickstoffgehalt (nach Trocknung): 0,2%

### Beispiel 4

### Vergleichsbeispiel (nicht erfindungsgemäß)

### 4.1 Herstellung eines phthalimidomethylierten, monodispersen, makroporösen Perlpolymerisates mit dem Quellungsmittel Essigsäure/ Essigsäureanhydrid

Bei Raumtemperatur werden 180 g Essigsäure in einem Rundkolben vorgelegt. Dazu werden 48,3 g Paraformaldehyd und 220,7 g Phthalimid gegeben. Anschließend werden 7,4 g Schwefelsäure (100%-ig) zu der Suspension getropft, die Mischung auf 70°C aufgeheizt und bei 70°C für 1 Stunde gerührt. Anschließend werden 153 g Acetanhydrid innerhalb von 0,5 Stunden zugetropft. Danach werden 159,2 g monodisperses Perlpolymerisat aus Beispiel 1.1 zugegeben und anschließend innerhalb von 2 Stunden 286,9 g Schwefelsäure (100%-ig) zudosiert. Die Suspension wird auf 115°C aufgeheizt und weitere 10 Stunden bei dieser Temperatur gerührt. Es wird auf 70°C abgekühlt und die Perlen auf einem Sieb abgetrennt. Anschließend werden die Perlen zweimal bei 70°C mit Essigsäure und dreimal bei 70°C mit vollentsalztem Wasser gewaschen.
Volumenausbeute: 725 ml
Stickstoffgehalt (nach Trocknung): 4,5%

## Patentansprüche

1. Verfahren zur Herstellung von amidomethylierten, vinylaromatischen Perlpolymerisaten, **dadurch gekennzeichnet, dass** mindestens ein vinylaromatisches Perlpolymerisat mit mindestens einer Verbindung der Formel (I) oder deren Salze 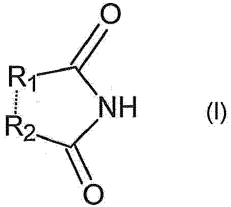 wobei R₁ = -CH-(C₁-C₆-Alkyl) oder -CH₂- und R₂ = -CH-(C₁-C₆-Alkyl) oder -CH₂- oder R₁ und R₂ sind zwei Kohlenstoffatome eines gegebenenfalls durch ein oder zwei C₁-C₆-Alkylreste substituierten aromatischen C₆-Ringes oder R₁ und R₂ stehen jeweils für -CH= und
mindestens einem kondensierten Formaldehyd
in Gegenwart mindestens einer Protonensäure und
in Gegenwart mindestens einer Verbindung der Formel (II) 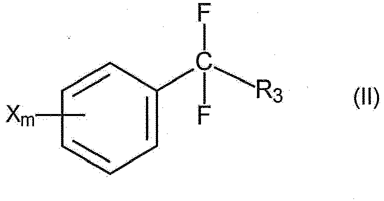 wobei R₃ = -C₁-C₄-Alkyl, F oder Cl oder ganz oder teilweise chloriertes oder fluoriertes -C₁-C₄Alkyl ist und X = Cl oder F und m = 0, 1 oder 2 ist, umgesetzt wird.

2. Verfahren gemäß Anspruch 1, **dadurch gekennzeichnet, dass** als Verbindungen der Formel (II) Chlorbenzotrifluorid, Dichlorbenzotrifluorid, Benzotrifluorid oder Mischungen davon eingesetzt werden.

3. Verfahren gemäß einem der Ansprüche 1 oder 2, **dadurch gekennzeichnet, dass** als Protonensäuren Schwefelsäure eingesetzt wird.

4. Verfahren gemäß einem oder mehreren der Ansprüche 1 bis 3, **dadurch gekennzeichnet, dass** als kondensierte Formaldehyde Paraformaldehyd oder Trioxan oder Gemische aus diesen Verbindungen eingesetzt werden.

5. Verfahren gemäß einem oder mehreren der Ansprüche 1 bis 4, **dadurch gekennzeichnet, dass** als vinylaromatisches Perlpolymerisat ein Styrol / Divinylbenzol Copolymerisat eingesetzt wird.

6. Verfahren gemäß einem oder mehreren der Ansprüche 1 bis 5, **dadurch gekennzeichnet, dass** als Verbindung der Formel (I) Phthalimid oder dessen Salze eingesetzt wird.

7. Verfahren gemäß einem oder mehreren der Ansprüche 1 bis 6, **dadurch gekennzeichnet, dass** als vinylaromatisches Perlpolymerisat ein monodisperses, vinylaromatisches Perlpolymerisat hergestellt wird.

8. Verfahren gemäß einem oder mehreren der Ansprüche 1 bis 7, **dadurch gekennzeichnet, dass** als vinylaromatisches Perlpolymerisat ein makroporöses, monodisperses, vinylaromatisches Perlpolymerisat eingesetzt wird.

9. Verfahren gemäß einem oder mehreren der Ansprüche 1 bis 8, **dadurch gekennzeichnet, dass** das Stoffmengenverhältnis der Verbindungen der Formel (II) zu den Verbindungen der Formel (I) 3,5:1 bis 9:1 beträgt.

10. Verfahren gemäß einem oder mehreren der Ansprüche 1 bis 9, **dadurch gekennzeichnet, dass** das Stoffmengenverhältnis der aromatischen Gruppen im vinylaromatischen Perlpolymerisat zu den Verbindungen der Formel (I) 0,5:1 bis 1,8:1 beträgt.

11. Verfahren gemäß einem oder mehreren der Ansprüche 1 bis 10, **dadurch gekennzeichnet, dass** das Stoffmengenverhältnis von Verbindungen der Formel (I) zu kondensiertem Formaldehyd 0,95:1 bis 1,1:1 beträgt.

12. Verfahren gemäß einem oder mehreren der Ansprüche 1 bis 11, **dadurch gekennzeichnet, dass** das Stoffmengenverhältnis der Verbindungen der Formel (I) zu der eingesetzten Protonensäure zwischen 10:1 bis 1:10 liegt.

13. Verfahren gemäß einem oder mehreren der Ansprüche 1 bis 12, **dadurch gekennzeichnet, dass** die Reaktionstemperatur für die Umsetzung der vinylaromatischen Perlpolymerisate zu den amidomethylierten, vinylaromatischen Perlpolymerisaten zwischen 20 °C und 40 °C liegt.

## Claims

1. Method of producing amidomethylated vinylaromatic bead polymers, **characterized in that** at least one vinylaromatic bead polymer is reacted with at least one compound of formula (I) or salts thereof 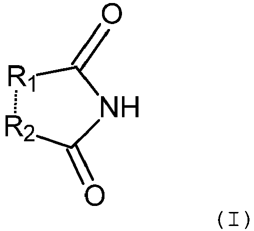 where R₁ = -CH-(C₁-C₆-alkyl) or -CH₂- and R₂ = -CH-(C₁-C₆-alkyl) or -CH₂- or R₁ and R₂ are two carbon atoms of an aromatic C₆-ring optionally substituted by one or two C₁-C₆-alkyl radials or R₁ and R₂ each represent -CH= and
at least one condensed formaldehyde
in the presence of at least one protic acid and
in the presence of at least one compound of the formula (II) 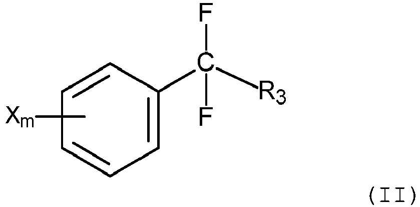 where R₃ = C₁-C₄-alkyl, F or Cl or wholly or partly chlorinated or fluorinated C₁-C₄-alkyl and X = Cl or F and m = 0, 1 or 2.

2. Method according to Claim 1, **characterized in that** chlorobenzotrifluoride, dichlorobenzotrifluoride, benzotrifluoride or mixtures thereof are employed as compounds of formula (II).

3. Method according to either of Claims 1 and 2, **characterized in that** sulfuric acid is employed as protic acids.

4. Method according to one or more of Claims 1 to 3, **characterized in that** paraformaldehyde or trioxane or mixtures thereof are employed as condensed formaldehydes.

5. Method according to one or more of Claims 1 to 4, **characterized in that** a styrene/divinylbenzene copolymer is employed as vinylaromatic bead polymer.

6. Method according to one or more of Claims 1 to 5, **characterized in that** phthalimide or salts thereof are employed as compound of the formula (I).

7. Method according to one or more of Claims 1 to 6, **characterized in that** a monodisperse, vinylaromatic bead polymer is prepared as vinylaromatic bead polymer.

8. Method according to one or more of Claims 1 to 7, **characterized in that** a macroporous, monodisperse, vinylaromatic bead polymer is employed as vinylaromatic bead polymer.

9. Method according to one or more of Claims 1 to 8, **characterized in that** the amount-of-substance ratio of the compounds of formula (II) to the compounds of formula (I) is in the range from 3.5:1 to 9:1.

10. Method according to one or more of Claims 1 to 9, **characterized in that** the amount-of-substance ratio of the aromatic groups in the vinylaromatic bead polymer to the compounds of formula (I) is in the range from 0.5:1 to 1.8:1.

11. Method according to one or more of Claims 1 to 10, **characterized in that** the amount-of-substance ratio of compounds of formula (I) to condensed formaldehyde is in the range from 0.95:1 to 1.1:1.

12. Method according to one or more of Claims 1 to 11, **characterized in that** the amount-of-substance ratio of the compounds of formula (I) to the protic acid employed is in the range from 10:1 to 1:10.

13. Method according to one or more of Claims 1 to 12, **characterized in that** the reaction temperature for the conversion of the vinylaromatic bead polymers into the amidomethylated vinylaromatic bead polymers is between 20°C and 40°C.

## Revendications

1. Procédé de fabrication de polymères en perles vinylaromatiques amidométhylés, **caractérisé en ce qu'**au moins un polymère en perles vinylaromatique est mis en réaction avec au moins un composé de la formule (I) ou ses sels 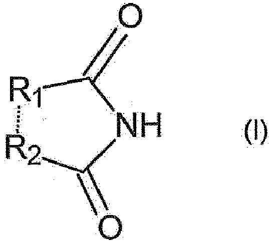 avec R₁ = -CH- (alkyle en C₁-C₆) ou -CH₂- et R₂ = -CH-(alkyle en C₁-C₆) ou -CH₂-, ou R₁ et R₂ sont deux atomes de carbone d'un cycle en C₆ aromatique éventuellement susbtitué par un ou deux radicaux alkyle en C₁-C₆, ou R₁ et R₂ représentent chacun -CH=, et
au moins un formaldéhyde condensé,
en présence d'au moins un acide protonique, et
en présence d'au moins un composé de la formule (II) : 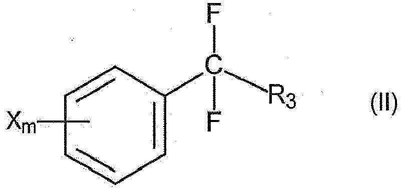 dans laquelle R₃ = alkyle en C₁-C₄, F ou Cl, ou alkyle en C₁-C₄ entièrement ou partiellement chloré ou fluoré, et X = Cl ou F, et m = 0, 1 ou 2.

2. Procédé selon la revendication 1, **caractérisé en ce que** du chlorobenzotrifluorure, du dichlorobenzotrifluorure, du benzotrifluorure ou leurs mélanges sont utilisés en tant que composés de la formule (II).

3. Procédé selon l'une quelconque des revendications 1 ou 2, **caractérisé en ce que** de l'acide sulfurique est utilisé en tant qu'acide protonique.

4. Procédé selon une ou plusieurs des revendications 1 à 3, **caractérisé en ce que** du paraformaldéhyde ou du trioxane ou des mélanges de ces composés sont utilisés en tant que formaldéhydes condensés.

5. Procédé selon une ou plusieurs des revendications 1 à 4, **caractérisé en ce qu'**un copolymère de styrène/divinylbenzène est utilisé en tant que polymère en perles vinylaromatique.

6. Procédé selon une ou plusieurs des revendications 1 à 5, **caractérisé en ce que** du phtalimide ou ses sels sont utilisés en tant que composé de la formule (I).

7. Procédé selon une ou plusieurs des revendications 1 à 6, **caractérisé en ce qu'**un polymère en perles vinylaromatique monodispersé est fabriqué en tant que polymère en perles vinylaromatique.

8. Procédé selon une ou plusieurs des revendications 1 à 7, **caractérisé en ce qu'**un polymère en perles vinylaromatique monodispersé macroporeux est utilisé en tant que polymère en perles vinylaromatique.

9. Procédé selon une ou plusieurs des revendications 1 à 8, **caractérisé en ce que** le rapport entre les quantités de matière des composés de la formule (II) et des composés de la formule (I) est de 3,5:1 à 9:1.

10. Procédé selon une ou plusieurs des revendications 1 à 9, **caractérisé en ce que** le rapport entre les quantités de matière des groupes aromatiques dans le polymère en perles vinylaromatique et des composés de la formule (I) est de 0,5:1 à 1,8:1.

11. Procédé selon une ou plusieurs des revendications 1 à 10, **caractérisé en ce que** le rapport entre les quantités de matière des composés de la formule (I) et du formaldéhyde condensé est de 0,95:1 à 1,1:1.

12. Procédé selon une ou plusieurs des revendications 1 à 11, **caractérisé en ce que** le rapport entre les quantités de matière des composés de la formule (I) et de l'acide protonique utilisé est compris entre 10:1 et 1:10.

13. Procédé selon une ou plusieurs des revendications 1 à 12, **caractérisé en ce que** la température de réaction pour la réaction des polymères en perles vinylaromatiques pour former les polymères en perles vinylaromatiques amidométhylés est comprise entre 20 °C et 40 °C.
